(19) Europäisches Patentamt / European Patent Office / Office européen des brevets

(11) **EP 2 102 029 B1**

(12) **FASCICULE DE BREVET EUROPEEN**

(45) Date de publication et mention de la délivrance du brevet:
**02.11.2011 Bulletin 2011/44**

(21) Numéro de dépôt: **07871889.7**

(22) Date de dépôt: **07.12.2007**

(51) Int Cl.:
*B60L 15/20* (2006.01)     *G05B 13/02* (2006.01)
*G05B 13/04* (2006.01)     *G05B 19/02* (2006.01)

(86) Numéro de dépôt international:
**PCT/FR2007/052455**

(87) Numéro de publication internationale:
**WO 2008/087309 (24.07.2008 Gazette 2008/30)**

(54) **PROCEDE DE COMMANDE D'UN MOTEUR ELECTRIQUE DE VEHICULE HYBRIDE OU ELECTRIQUE**

VERFAHREN ZUR STEUERUNG DES ELEKTROMOTORS EINES HYBRID- ODER ELEKTROFAHRZEUGS

METHOD FOR CONTROLLING THE ELECTRIC MOTOR OF A HYBRID OR ELECTRIC VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.12.2006 FR 0655485**

(43) Date de publication de la demande:
**23.09.2009 Bulletin 2009/39**

(73) Titulaire: **Peugeot Citroën Automobiles SA 78140 Vélizy-Villacoublay (FR)**

(72) Inventeurs:
- **LE NEINDRE, Yvan F-75017 Paris (FR)**
- **COLLEDANI, Frédéric F-75150 Le Chesnay (FR)**
- **GUERIN, Stéphane F-75013 Paris (FR)**

(56) Documents cités:
JP-A- 2004 272 741     US-A- 5 610 483
US-A1- 2002 060 545     US-A1- 2006 025 906

**Description**

L'invention concerne les véhicules utilisant un moteur électrique pour la traction, ce qui inclut notamment les véhicules électriques et les véhicules équipés d'une pile à combustible, et elle concerne plus particulièrement les véhicules de type hybride parallèle.

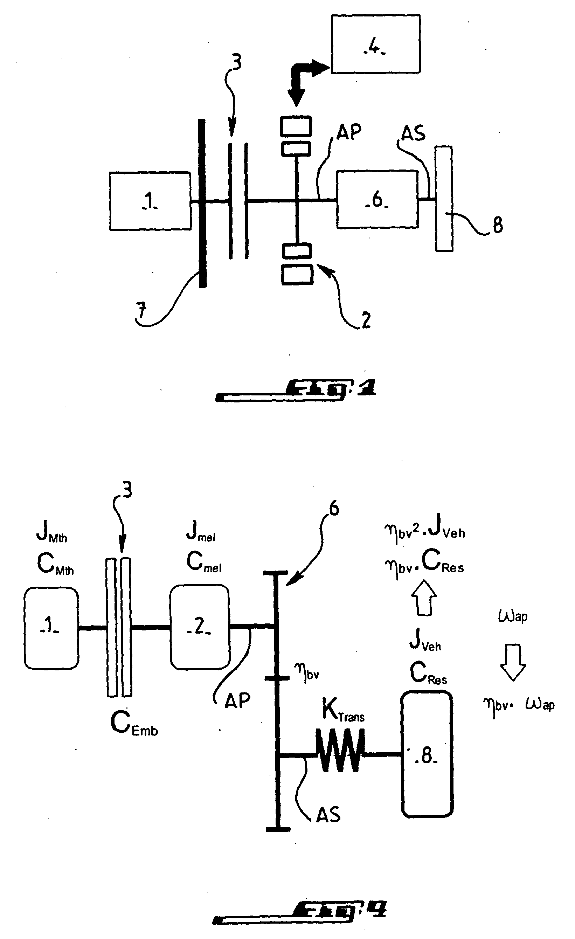

Comme représenté schématiquement en figure 1, un véhicule hybride parallèle comprend un moteur thermique 1 et une machine électrique 2 ou moteur électrique, dont la combinaison permet d'assurer la traction tout en optimisant la consommation de carburant et la dépollution.

Un tel véhicule peut rouler en utilisant soit le moteur thermique, soit le moteur électrique ou encore les deux. Il est équipé d'un système de couplage et de découplage du moteur thermique et de la machine électrique qui, dans l'exemple de la figure 1, est un embrayage 3 interposé entre le moteur thermique 1 et la machine électrique 2.

Ces différents organes sont désignés couramment par le terme GMP signifiant groupe motopropulseur, terme que l'on utilisera par la suite.

Dans un tel groupe motopropulseur, le moteur électrique 2 qui est alimenté par une batterie de puissance 4, entraîne directement un arbre primaire AP d'une boîte de vitesses 6, et le moteur thermique 1 est accouplé à cet arbre primaire AP par l'embrayage 3.

Comme visible sur la figure 1, ce groupe motopropulseur comprend encore un volant d'inertie 7 rigidement solidaire de l'arbre du moteur thermique, et la boîte de vitesses 6 entraîne via son arbre secondaire AS des roues telles que la roue repérée par 8.

Chacun des organes de ce groupe motopropulseur est piloté par un calculateur dédié qui est lui-même commandé par un calculateur de supervision qui prend des décisions et synchronise des commandes pour répondre à la volonté du conducteur. Ces calculateurs ne sont pas représentés.

Ce superviseur pilote la chaîne de traction, décide du mode de roulage et coordonne les phases transitoires, il détermine également les points de fonctionnement pour optimiser la consommation et la dépollution.

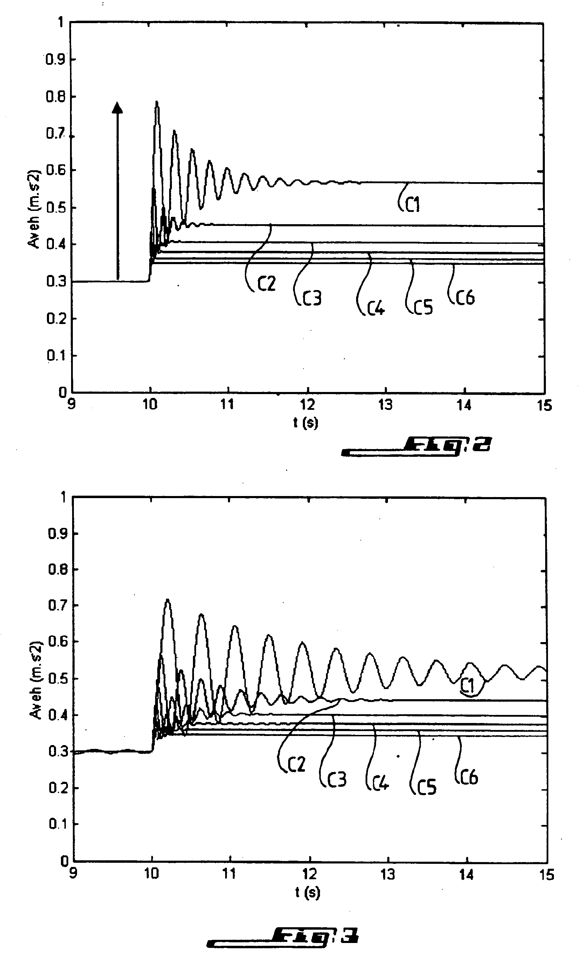

Dans les figures 2 et 3, on a représenté l'incidence sur l'accélération du véhicule, d'une discontinuité du couple appliqué à l'arbre primaire AP, à un instant t=10s. Dans le cas de la figure 2, il s'agit d'une discontinuité de couple observé à l'arbre primaire dans le cas d'un mode de traction électrique seul, et dans le cas de la figure 3, il s'agit d'une discontinuité de couple observé dans le cas d'un mode de traction thermique et électrique.

Cette discontinuité génère des oscillations de la vitesse de rotation de la chaîne de traction, c'est-à-dire de l'ensemble des éléments tournants de la chaîne de traction qui transmettent la puissance motrice aux roues du véhicule.

Ces oscillations de vitesse de rotation des éléments de transmission se traduisent par des oscillations de l'accélération du véhicule, c'est-à-dire par des à-coups du véhicule, ce qui constitue un désagrément pour ses occupants.

Dans les exemples des figures 2 et 3, ces séries d'oscillations apparaissent sur les courbes C1 à C6, qui reflètent l'incidence d'une discontinuité de couple à l'instant t=10s lorsque le rapport engagé est respectivement le premier, deuxième, troisième, quatrième, cinquième et sixième rapport.

Comme le montrent ces courbes, la fréquence de ces oscillations, qui correspond à des modes propres de la chaîne de traction, est différente selon que c'est le moteur thermique ou le moteur électrique qui est utilisé, ce qui est dû à l'augmentation de l'inertie de la transmission lorsque l'embrayage est fermé. Elle diffère également d'un rapport de boîte de vitesses à l'autre, ce qui est dû au changement de démultiplication.

Le document US2006/0025906 divulgue une méthode pour réduire les vibrations de l'arbre de transmission dans un groupe motopropulseur de véhicule hybride électrique. Divers filtres sont appliqués à des expressions comprenant la vitesse de rotation des roues ou du moteur.

Le document US5610483 divulgue une méthode de contrôle commande pour véhicule électrique. Un filtre à élimination de bande est appliqué aux moyens qui génèrent une consigne de couple.

Le document JP2004272741 divulgue une méthode de suppression des vibrations. Comme dans le document US2006/0025906, un filtre, notamment un filtre passe bas, est appliqué à la vitesse de rotation d'un moteur.

Le document US2002/0060545 divulgue une méthode de contrôle commande pour réduire les vibrations dans un environnement de moteur électrique. Il utilise un filtre passe bande qui s'applique à la vitesse de rotation du moteur.

Le but de l'invention est de proposer une solution pour diminuer l'incidence des discontinuités du couple appliqué à l'arbre primaire sur l'accélération du véhicule.

A cet effet, l'invention a pour objet un procédé de pilotage d'un moteur électrique entraînant un arbre de transmission d'un véhicule, notamment d'un véhicule automobile, tel que defini par la revendication 1, ce moteur appliquant à l'arbre de transmission un couple ayant une valeur correspondant à une consigne de couple appliquée à ce moteur électrique, dans lequel la consigne de couple est corrigée par soustraction d'un signal correctif résultant de l'application à un signal représentatif de la vitesse instantanée de rotation de l'arbre de transmission d'un traitement de type filtrage passe bande, dans une bande de fréquence incluant une fréquence d'un mode propre d'oscillation de la chaîne de traction du véhicule.

L'invention concerne également un procédé tel que défini ci-dessus, dans lequel le traitement de filtrage comprend l'application successive de deux ou trois filtres passe-bande en cascade.

L'invention concerne également un procédé tel que défini ci-dessus, dans lequel l'amplitude du signal correctif dépend du rapport de boîte de vitesses qui est engagé.

L'invention concerne également un procédé tel que défini ci-dessus, dans lequel l'amplitude du signal correctif dépend de l'état fermé ou ouvert d'un embrayage relié à l'arbre de transmission.

L'invention concerne également un procédé tel que défini ci-dessus, dans lequel le traitement de filtrage est mis en oeuvre avec des filtres ayant des bandes passantes dépendant du rapport engagé et/ou de l'état ouvert ou fermé de l'embrayage.

L'invention concerne également un véhicule, comprenant un moteur électrique pour la traction, entraînant en rotation un arbre de transmission, tel que defini par la revendication 6, le moteur électrique appliquant à l'arbre de transmission un couple ayant une valeur correspondant à une consigne de couple appliquée à ce moteur électrique, ainsi que des moyens de commande du moteur électrique comprenant au moins un filtre passe-bande pour corriger la consigne de couple par soustraction d'un signal correctif résultant de l'application, à un signal représentatif de la vitesse instantanée de rotation de l'arbre de transmission, d'un traitement de type filtrage passe bande, dans une bande de fréquence incluant une fréquence d'un mode propre d'oscillation de la chaîne de traction du véhicule. Les moyens de commandes du moteur électrique comprennent en outre deux ou trois filtres passe-bande, en cascade, pour le traitement de filtrage.

L'invention concerne également un véhicule tel que défini ci-dessus, comprenant en outre un moteur thermique et un embrayage pour accoupler ou désaccoupler le moteur thermique à/de l'arbre de transmission, et une boîte de vitesses entraînée par l'arbre de transmission. Selon une caractéristique, les filtres passe-bande ont des bandes passantes dépendant d'un rapport engagé de la boîte de vitesse et/ou de l'état ouvert ou fermé de l'embrayage.

L'invention sera maintenant décrite plus en détail, et en référence aux figures annexées.

La figure 1, déjà décrite, est une représentation schématique de la chaîne de traction d'un véhicule hybride ;
La figure 2, déjà décrite, est un graphe montrant l'incidence sur l'accélération du véhicule d'une discontinuité du couple appliqué à l'arbre primaire ;
La figure 3, déjà décrite, est un graphe montrant l'incidence sur l'accélération du véhicule d'une discontinuité du couple appliqué à l'arbre primaire ;
La figure 4 est une représentation de la modélisation mécanique de la chaîne de traction de la figure 1 ;
La figure 5 est un schéma bloc montrant un correcteur pour implémenter le procédé selon l'invention ;
La figure 6 est un diagramme de Bode d'un filtre passe-bande du correcteur de la figure 5 ;
La figure 7 montre schématiquement l'effet du correcteur de la figure 5 sur un signal ayant une fréquence inférieure à la bande passante de ce correcteur ;
La figure 8 montre schématiquement l'effet du correcteur de la figure 5 sur un signal ayant une fréquence située dans la bande passante de ce correcteur ;
La figure 9 montre schématiquement l'effet du correcteur de la figure 5 sur un signal ayant une fréquence située au-delà de la bande passante de ce correcteur ;
La figure 10 est un graphe représentatif de l'accélération d'un véhicule dans lequel est implémenté le procédé selon l'invention lorsqu'une discontinuité de couple est appliquée ;
La figure 11 est un graphe montrant le couple correctif appliqué par le moteur électrique dans la situation de la figure 10.

L'idée à la base de l'invention, est d'agir sur la commande du moteur électrique pour contrecarrer les oscillations dues à une discontinuité du couple appliquée par exemple par le groupe motopropulseur. Ceci est effectué en corrigeant en temps réel la consigne de couple appliquée au moteur électrique ; cette consigne de couple correspondant au couple appliqué par le moteur électrique à l'arbre primaire AP.

Cette correction consiste, lorsque le véhicule est sujet à des oscillations de son accélération, à diminuer le couple appliqué par le moteur électrique lorsque l'accélération est maximale, et à l'augmenter lorsque l'accélération est minimale.

Ceci est obtenu, selon l'invention, en soustrayant à la consigne de couple, un signal correctif résultant du signal représentatif du régime de l'arbre primaire traité par un correcteur se comportant comme un filtre passe-bande.

La bande passante de ce filtre est choisie pour inclure la fréquence du mode propre d'oscillations de la chaîne de traction du véhicule dans une situation donnée. Chaque situation est définie par l'état ouvert ou fermé de l'embrayage et par le rapport qui est engagé dans la boîte de vitesses, et elle correspond à un mode propre déterminé.

Les fréquences des différents modes propres se déterminent comme suit, à partir de la modélisation mécanique de la chaîne de traction représentée schématiquement en figure 4.

Comme noté en figure 4, on définit les variables suivantes : $C_{mth}$ : couple appliqué par le moteur thermique ; $C_{mel}$ : couple appliqué par le moteur électrique ; $C_{Trans}$ : couple transmis par la transmission ; $C_{res}$ : couple résistant

appliqué au véhicule roulant ; $C_{emb}$ : couple transmis par l'embrayage ; $J_{Mth}$ : inertie du moteur thermique ; $J_{Mel}$ : inertie du moteur électrique ; $J_{Veh}$ : inertie du véhicule ; $\omega_{ap}$ : vitesse angulaire de l'arbre primaire ; $\eta_{bv}$ : démultiplication de la transmission. Les couples sont exprimés en N.m, les inerties en kg.m2 et les pulsations en rad/sec. En considérant que seule la transmission possède une raideur le long de la chaîne de traction du véhicule, on définit également $K_{Trans}$ qui représente la raideur et $F_{Trans}$ l'amortissement de la transmission, exprimé en N.m.

L'équilibre des couples du groupe motopropulseur du modèle de la figure 4 conduit à l'équation d'oscillation (1), pour laquelle la fréquence du mode propre est donnée par la relation (2) :

$$J_{veh}\frac{d\omega_{roue}}{dt}=J_{veh}\ddot{\theta}_{Roue}=K_{Trans}(\theta_{Diff}-\theta_{Roue})+F_{Trans}(\dot{\theta}_{Diff}-\dot{\theta}_{Roue})-C_{res}$$

$$J_{GMP}\frac{d\omega_{ap}}{dt}=\frac{J_{GMP}}{\eta_{bv}}\ddot{\theta}_{Diff}=C_{GMP}-\eta_{bv}K_{Trans}(\theta_{Diff}-\theta_{Roue})-\eta_{bv}F_{Trans}(\dot{\theta}_{Diff}-\dot{\theta}_{Roue})$$

en posant :

Il vient :

$$(\ddot{\theta}_{Diff} - \ddot{\theta}_{Roue}) + \frac{F_{Trans}}{J_{eq}}(\dot{\theta}_{Diff} - \dot{\theta}_{Roue}) + \frac{K_{Trans}}{J_{eq}}(\theta_{Diff} - \theta_{Roue})$$

$$J_{eq} = \frac{J_{veh}\dfrac{J_{GMP}}{\eta_{bv}^2}}{J_{veh} + \dfrac{J_{GMP}}{\eta_{bv}^2}}$$

$$= \frac{C_{GMP}}{\eta_{bv}\dfrac{J_{GMP}}{\eta_{bv}^2}} + \frac{C_{res}}{J_{veh}} = \frac{C_{GMP}}{\dfrac{J_{GMP}}{\eta_{bv}}} + \frac{C_{res}}{J_{veh}}$$

D'où :

$$\ddot{X} + 2\xi\omega_n\dot{X} + \omega_n^2 X = Exc$$

**(1)**

$$f_n = 2\pi \cdot \sqrt{\frac{K_{Trans}}{J_{eq}}}\ \ \textbf{(2)}$$

EP 2 102 029 B1

Connaissant la constante de raideur de la chaîne de traction, la fréquence des modes propres dépend de l'inertie équivalente $J_{eq}$.

L'inertie $J_{GMP}$ qui apparaît dans l'expression de $J_{eq}$ dépend du mode de roulage, puisque l'inertie du moteur thermique $J_{MTH}$ s'ajoute à celle du moteur électrique $J_{MEL}$ lorsque l'embrayage est fermé. D'autre part, la valeur de $J_{eq}$ dépend aussi du rapport engagé puisque le terme $\eta_{bv}$ apparaît dans son expression.

La fréquence du mode propre $f_n$ dépend donc principalement du rapport de boite de vitesses qui est engagé, et de l'état fermé ou ouvert de l'embrayage, de sorte que le nombre total de pulsations propres possibles vaut le double du nombre de rapports de la boîte de vitesses.

Pour une situation de vie donnée du véhicule, définie par un certain rapport engagé et par l'état ouvert ou fermé de l'embrayage, la vitesse transmise par la chaîne de traction est donc susceptible d'osciller à une fréquence connue, dépendant principalement du rapport engagé et de l'état de l'embrayage.

Selon l'invention, un signal représentatif du régime de l'arbre primaire AP est injecté en entrée d'un correcteur pour former, en sortie de ce correcteur, un signal correctif qui est ensuite soustrait à la consigne de couple du moteur électrique.

Le correcteur se comporte comme un filtre passe bande ayant une bande de fréquences dont la fréquence centrale est la fréquence du mode propre de la chaîne de traction.

Lorsque la vitesse de l'arbre primaire oscille à une fréquence proche de la fréquence du mode propre, alors le signal correctif est un signal oscillant qui est en phase avec le signal représentatif du régime instantané de l'arbre primaire.

Ainsi, lorsque le véhicule est sujet à des oscillations de son accélération, le signal correctif diminue le couple appliqué par le moteur électrique lorsque l'accélération est maximale, et il augmente ce couple lorsque l'accélération est minimale, ce qui atténue rapidement les oscillations.

Lorsque le véhicule est sujet à des oscillations de son accélération ayant une fréquence éloignée des fréquences des modes propres de la chaîne de traction, et donc située hors de la bande passante du correcteur, le signal correctif est nul ou presque. De même lorsque le véhicule n'est pas soumis à des oscillations de son accélération.

Le correcteur est avantageusement formé de plusieurs blocs en cascade, se comportant chacun comme un filtre passe bande. La succession de blocs en cascade permet de modifier l'ordre du filtrage (deuxième ordre, quatrième ordre, etc) et donc les pentes du diagramme de Bode sans incidence sur les fréquences de coupure, c'est-à-dire sur la bande passante.

Mais un filtrage excessif augmente le déphasage en dehors de la pulsation à traiter et réduit l'amplitude pour une bande de fréquence étroite. Il nuit de plus à la dynamique de la consigne de couple du moteur électrique car il s'oppose à toute variation de régime de celle-ci.

Il s'avère qu'une succession de deux ou trois blocs permet de réaliser un compromis entre la précision du filtrage et des critères de temps de réponse de la consigne de couple. Le choix d'un correcteur à deux ou trois blocs peut être effectué à l'issue d'une étape de calibration.

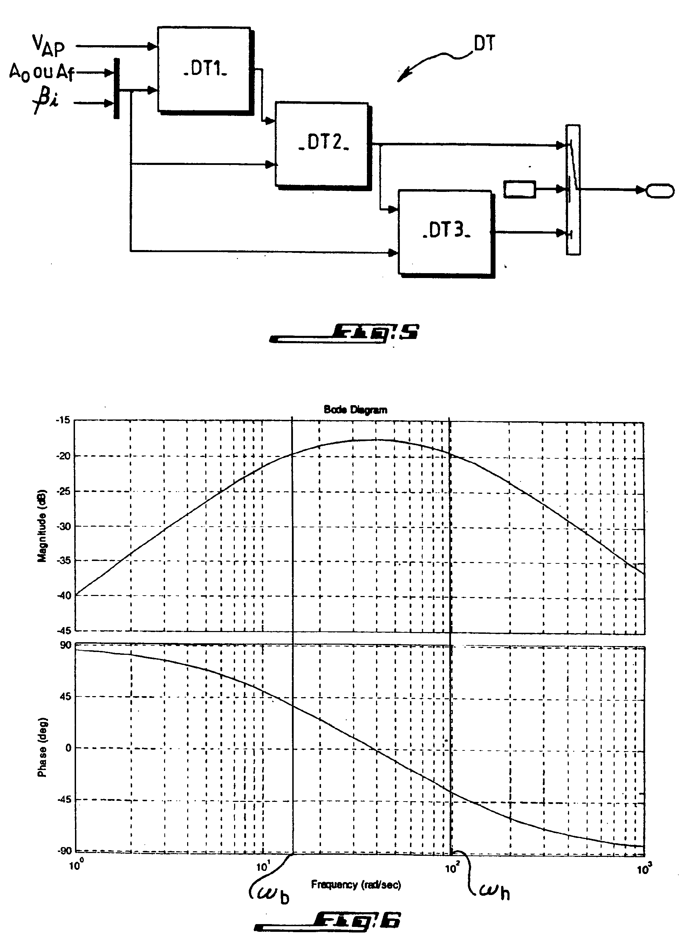

Un tel correcteur comprenant trois blocs est représenté schématiquement en figure 5, les trois blocs y étant repérés respectivement par DT1, DT2 et DT3, le correcteur en lui-même étant repéré par DT.

Le signal $V_{AP}$ représentatif du régime instantané de l'arbre primaire AP est appliqué en entrée du premier bloc DT1, conjointement avec un facteur d'amplification ou de gain valant $A_o$ ou $A_f$ selon que l'embrayage est ouvert ou fermé et avec un autre facteur d'amplification ou de gain $\beta_i$ dépendant du rapport de boîte de vitesses qui est engagé. La détermination de ces facteurs ou gains est donnée dans la suite.

Le signal correctif qui est délivré en sortie du bloc DT2 ou DT3 est un signal proportionnel à un couple de correction à soustraire à la consigne de couple du moteur électrique. Il s'agit d'un signal oscillant qui est en phase avec les oscillations de la vitesse de rotation de la transmission.

Le filtre choisi dans l'exemple des figures, pour chaque bloc DT1, DT2 et DT3 est du 2ème ordre pour rejeter les composantes ayant des fréquences situées hors de la bande passante. Cette bande passante est définie par une fréquence de coupure basse notée $f_b$ et une fréquence de coupure haute notée $f_h$.

Ce filtre possède un diagramme de Bode représenté en figure 6, qui montre un gain maximal et un déphasage nul au niveau d'une fréquence dite centrale. D'autres filtres, d'ordres différents, sont également envisageables.

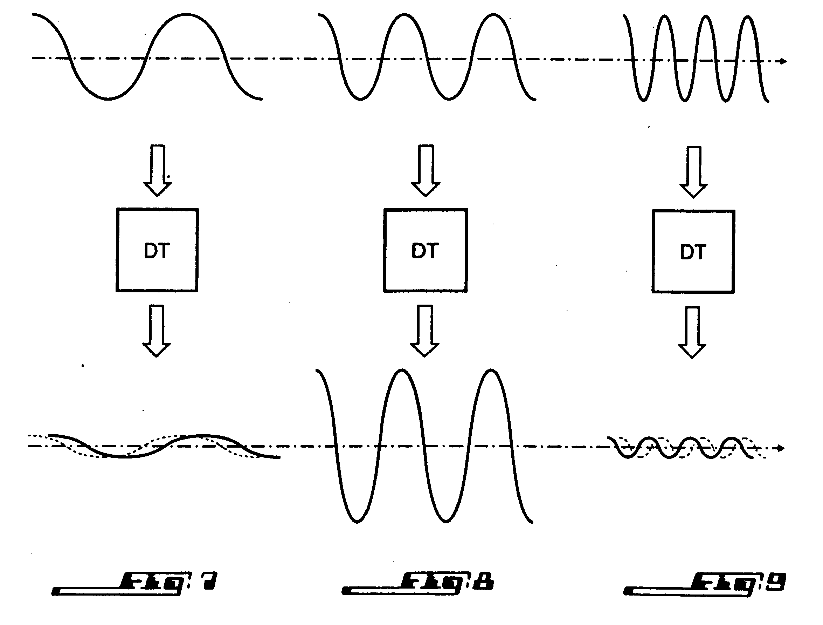

Les figures 7, 8 et 9 représentent les signaux de sortie du correcteur pour différents signaux d'entrée sinusoïdaux. Dans la figure 7, le signal d'entrée a une fréquence qui est en dehors de la bande passante, du côté des fréquences basses, ce qui produit un signal de sortie de faible amplitude qui est déphasé.

Dans la figure 8, le signal d'entrée a une fréquence qui est comprise dans la bande passante, ce qui produit un signal de sortie de forte amplitude qui n'est pas déphasé par rapport au signal d'entrée.

Dans la figure 9, le signal d'entrée a une fréquence qui est en dehors de la bande passante, du côté des fréquences hautes, ce qui produit un signal de sortie qui est déphasé et qui a une faible amplitude.

La fréquence de coupure haute est déterminée à partir du théorème de Shanon, et la fréquence de coupure basse est choisie pour obtenir une correction d'amplitude maximale et un déphasage nul à la fréquence du mode propre

$f_n$ à atténuer.

Conformément au théorème de Shannon, la fréquence d'échantillonnage d'un signal doit être supérieure ou égale au double de la fréquence maximale contenue dans ce signal, afin de convertir ce signal d'une forme analogique à une forme numérique sans perte d'information.

La fréquence de coupure haute des filtres passe bande est donc choisie inférieure ou égale à la moitié de la fréquence d'échantillonnage $F_{ech}$ du régime instantané de l'arbre primaire AP afin de respecter la réciproque du théorème de Shannon, soit $f_h = \dfrac{F_{ech}}{2}$, et en prenant comme notation la pulsation en radian par seconde du signal $\omega = 2\pi * f$ et

$\omega_0 = \sqrt{\omega_b \cdot \omega_h}$ et les variables réduites $u = \dfrac{\omega}{\omega_0}$ et $\alpha = \dfrac{\omega_b + \omega_h}{2 \cdot \omega_0}$ on obtient la fonction de transfert H :

$$H(j\omega) = \frac{\omega_0}{\omega_h} \cdot \frac{u}{1 + 2\alpha \cdot j \cdot u - u^2}$$

qui permet d'exprimer le gain G :

$$G(dB) = \frac{\omega_0}{\omega_h} \cdot \frac{u}{\sqrt{((1-u^2)^2 - 4\alpha^2 \cdot u^2)}}$$

La dérivation de cette relation par rapport à la variable réduite u, montre que le maximum du gain est obtenu pour $\omega = \omega_0$ quelle que soit la valeur de $\alpha$ et que cette solution annule aussi le déphasage introduit par le filtre.

La fréquence de coupure basse des filtres est choisie en fonction de la situation, c'est-à-dire de l'état ouvert ou fermé de l'embrayage et du rapport engagé, pour obtenir une correction d'amplitude maximale et un déphasage nul à la pulsation du mode propre $\omega_n$ à atténuer, soit dans notre cas : $\omega_0 = \omega_n$

$$\omega_b = \frac{(\omega_n)^2}{\omega_h} \quad \text{d'où} \quad f_b = \frac{2\pi \cdot (f_n)^2}{f_h}$$

Les amplitudes sont choisies à partir de la solution de l'équation différentielle exprimée ci-dessous :

$$(\theta_{Diff} - \theta_{Roue})(t) = A e^{-\xi \omega_n t} \cos(\omega_d t - \phi), avec : \omega_d = \sqrt{1 - \xi^2} \, \omega_n$$

$$\phi = Arc\tan\left(\frac{\xi\omega_n(\theta_{Diff} - \theta_{Roue})(0) + (\dot{\theta}_{Diff} - \dot{\theta}_{Roue})(0)}{\omega_d(\theta_{Diff} - \theta_{Roue})(0)}\right)$$

$$A = \frac{1}{\omega_d}\sqrt{(\omega_d(\theta_{Diff} - \theta_{Roue})(0))^2 + (\xi\omega_n(\theta_{Diff} - \theta_{Roue})(0) + (\dot{\theta}_{Diff} - \dot{\theta}_{Roue})(0))^2}$$

$$A \approx \frac{\ddot{K}}{\sqrt{\omega_n}}$$

Pour chaque rapport de la boîte de vitesses, l'amplitude des oscillation est donc inversement proportionnelle à la racine carrée de la pulsation du mode propre pour le rapport considéré, à savoir $\omega_n$.

Par ailleurs pour obtenir un même couple au niveau de la transmission il faut adapter le couple appliqué par le moteur électrique à l'arbre primaire AP en fonction du rapport de la boîte de vitesses qui est engagé. Ceci conduit à l'expression du couple Ci devant être appliqué par le moteur électrique, pour le $i^{ème}$ rapport, qui est $C_i \approx C_{1ère} \cdot \beta_i$, dans

laquelle $\quad \beta_i = \dfrac{\sqrt{\omega_{n_{1ère}}}}{\sqrt{\omega_{n_i}}} * \dfrac{\eta_i}{\eta_{1ère}} \quad$ et dans laquelle $C_1{}^{ère}$ est l'amplitude du couple à appliquer lorsque le rapport engagé est le premier rapport.

Ainsi, il est possible de calibrer expérimentalement l'amplitude du couple à appliquer pour le premier rapport de boîte de vitesses, lorsque c'est le moteur thermique qui est utilisé, et lorsque c'est uniquement le moteur électrique qui est utilisé. Ceci revient à déterminer le facteur d'amplification ou de gain $A_o$ à appliquer lorsque l'embrayage est ouvert, et le facteur d'amplification ou de gain $A_f$ à appliquer lorsque l'embrayage est fermé.

Le facteur de pondération $\beta_i$ pour les autres rapports est appliqué ensuite, ce qui permet de déterminer l'amplitude pour chaque rapport et pour chaque mode de fonctionnement du véhicule. La détermination des facteurs $\beta_i$ revient à la détermination des facteurs d'amplification ou de gain à appliquer en fonction du rapport qui est engagé.

Les facteurs d'amplification ou de gain $A_o$, $A_f$ et $\beta_i$ ainsi déterminés sont injectés en entrée du bloc DT1 du schéma de la figure 5, pour que le signal de sortie du correcteur ait une amplitude dépendant de la situation de vie du véhicule.

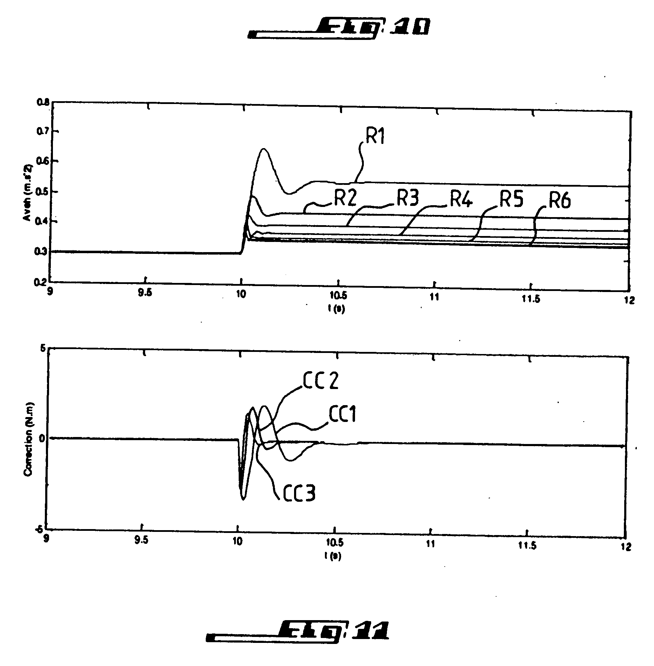

Le graphe de la figure 10 montre l'effet du procédé selon l'invention, dans le cas d'une discontinuité du couple détectée à un instant correspondant à t=10 secondes.

Les simulations sont réalisées pour les six rapports, la valeur de l'accélération du véhicule au cours du temps étant représentée par les six courbes repérées par R1 à R6 et correspondant respectivement aux rapports 1 à 6.

Comme visible dans ces diagrammes, lorsque la discontinuité de couple est détectée, les oscillations du régime de l'arbre primaire AP sont à peu près complètement atténuées à la fin du premier cycle oscillatoire.

En correspondance, la figure 11 donne l'évolution dans le temps du couple correctif appliqué par le moteur électrique, celui-ci étant représenté par les courbes C1 à C6 correspondant respectivement aux rapports 1 à 6.

L'implémentation du correcteur est avantageusement mise en oeuvre directement dans le calculateur pilotant le moteur électrique de sorte que la correction est active que le véhicule soit en mode moteur thermique ou en mode moteur électrique.

Ce choix d'implémentation permet d'autre part de répondre le plus rapidement possible aux oscillations en évitant les retards de communication, notamment entre le calculateur de supervision et le calculateur dédié au moteur électrique.

Enfin, cette implémentation dans le calculateur permet de facilement faire dépendre la bande passante des filtres DT1, DT2 et DT3 de la situation du véhicule, c'est-à-dire de l'état ouvert ou fermé de l'embrayage, et du rapport qui est engagé.

Une table de valeurs est avantageusement mémorisée dans le calculateur. Elle donne pour chaque rapport de boîte de vitesses engagé et pour l'état ouvert et fermé de l'embrayage la fréquence de coupure basse à laquelle doivent fonctionner les filtres passe bande, ces derniers étant implémentés sous forme logicielle, en temps discrétisé.

L'invention présente notamment les avantages suivants :

Du fait qu'elle est basée sur la mise en oeuvre de filtres passe-bande, elle ne risque pas d'amplifier ou d'entretenir des phénomènes oscillatoires ayant des fréquences situées hors de la bande passante.

Elle apporte ainsi une correction ayant un déphasage nul par rapport au signal d'entrée et une amplitude maximale à la fréquence du mode propre à traiter afin de compenser le plus efficacement possible les oscillations résultant de l'excitation des modes propres de la chaîne de traction.

Un paramétrage simple permet d'augmenter l'influence du filtrage tout en respectant des critères de temps de réponse de la consigne de couple.

**Revendications**

1. Procédé de pilotage d'un moteur électrique (2) entraînant un arbre de transmission (AP) d'un véhicule automobile, ce moteur appliquant à l'arbre de transmission (AP) un couple ayant une valeur correspondant à une consigne de couple appliquée à ce moteur électrique (2), **caractérisé en ce que** la consigne de couple est corrigée par soustraction d'un signal correctif résultant de l'application à un signal représentatif de la vitesse instantanée de rotation de l'arbre de transmission (AP) d'un traitement de type filtrage passe bande, dans une bande de fréquence incluant une fréquence d'un mode propre d'oscillation de la chaîne de traction du véhicule.

**2.** Procédé selon la revendication 1, dans lequel le traitement de filtrage comprend l'application successive de deux ou trois filtres passe-bande (TD1, TD2, TD3) en cascade.

**3.** Procédé selon la revendication 1 ou 2, dans lequel l'amplitude du signal correctif dépend du rapport de boîte de vitesses (6) qui est engagé.

**4.** Procédé selon l'une des revendications 1 à 3, dans lequel l'amplitude du signal correctif dépend de l'état fermé ou ouvert d'un embrayage (3) relié à l'arbre de transmission (AP).

**5.** Procédé selon l'une des revendications 3 ou 4, dans lequel le traitement de filtrage est mis en oeuvre avec les filtres passe-bande (TD1, TD2, TD3) ayant des bandes passantes dépendant du rapport engagé et/ou de l'état ouvert ou fermé de l'embrayage (3).

**6.** Véhicule comprenant un moteur électrique (2) pour la traction, entraînant en rotation un arbre de transmission (AP), le moteur électrique (2) appliquant à l'arbre de transmission (AP) un couple ayant une valeur correspondant à une consigne de couple appliquée à ce moteur électrique (2), **caractérisé en ce qu'**il comprend des moyens de commande du moteur électrique (2) comprenant au moins un filtre passe bande pour corriger la consigne de couple par soustraction d'un signal correctif résultant de l'application, à un signal représentatif de la vitesse instantanée de rotation de l'arbre de transmission (AP), d'un traitement de type filtrage passe bande, dans une bande de fréquence incluant une fréquence d'un mode propre d'oscillation de la chaîne de traction du véhicule.

**7.** Véhicule selon la revendication 6, **caractérisé en ce que** les moyens de commandes du moteur électrique (2) comprennent deux ou trois filtres passe-bande (TD1, TD2, TD3), en cascade, pour le traitement de filtrage.

**8.** Véhicule selon les revendications 6 et 7, comprenant en outre un moteur thermique (1) et un embrayage (3) pour accoupler ou désaccoupler le moteur thermique (1) à/de l'arbre de transmission (AP), et une boîte de vitesses (6) entraînée par l'arbre de transmission (1),.

**9.** Véhicule selon la revendication 8, dans lequel les filtres passe-bande (TD1, TD2, TD3) ont des bandes passantes dépendant d'un rapport engagé de la boîte de vitesses et/ou de l'état ouvert ou fermé de l'embrayage (3).

**Claims**

**1.** Method for controlling an electric motor (2) which drives a transmission shaft (AP) of a motor vehicle, this motor applying to the transmission shaft (AP) a torque having a value corresponding to a torque setpoint applied to this electric motor (2), **characterised in that** the torque setpoint is corrected by subtracting a correction signal obtained by processing a signal representing the instantaneous rotational speed of the transmission shaft (AP), using bandpass filtering in a frequency band which includes a frequency of a normal mode of oscillation of the traction train of the vehicle.

**2.** Method according to claim 1, wherein the filtering comprises the successive application of two or three stepped bandpass filters (TD1, TD2, TD3).

**3.** Method according to either claim 1 or claim 2, wherein the amplitude of the correction signal depends on the gearbox (6) ratio which is engaged.

**4.** Method according to any one of claims 1 to 3, wherein the amplitude of the correction signal depends on whether a clutch (3) connected to the transmission shaft (AP) is closed or open.

**5.** Method according to either claim 3 or claim 4, wherein the filtering is carried out using bandpass filters (TD1, TD2, TD3) having bandwidths based on the ratio engaged and/or whether the clutch (3) is open or closed.

**6.** Vehicle comprising an electric motor (2), for providing the traction, which drives a transmission shaft (AP) in rotation, the electric motor (2) applying to the transmission shaft (AP) a torque having a value corresponding to a torque setpoint applied to this electric motor (2), **characterised in that** it comprises means for controlling the electric motor (2) comprising at least a bandpass filter, for correcting the torque setpoint by subtracting a correction signal obtained by processing a signal representing the instantaneous rotational speed of the transmission shaft (AP), using bandpass filtering in a frequency band which includes a frequency of a normal mode of oscillation of the traction train of the vehicle.

7. Vehicle according to claim 6, **characterised in that** the means for controlling the electric motor (2) comprise two or three stepped bandpass filters (TD1, TD2, TD3) for the filtering.

8. Vehicle according to claims 6 and 7, further comprising a heat engine (1), a clutch (3) for coupling or uncoupling the heat engine (1) to/from the transmission shaft (AP), and a gearbox (6) driven by the transmission shaft (1).

9. Vehicle according to claim 8, wherein the bandpass filters (TD1, TD2, TD3) have bandwidths based on an engaged ratio of the gearbox and/or on whether the clutch (3) is open or closed.

**Patentansprüche**

1. Verfahren zum Steuern eines Elektromotors (2) zum Antreiben einer Antriebswelle (AP) eines Kraftfahrzeugs, wobei dieser Motor ein Drehmoment auf die Antriebswelle (AP) überträgt, das einem Wert entsprechend einem Drehmomentsollwert entspricht, der auf diesen Elektromotor (2) angewandt wird, **dadurch gekennzeichnet, dass** der Drehmomentsollwert durch das Abziehen eines Korrektursignals korrigiert wird, das sich aus der Anwendung einer Bandpassfilter-Behandlung auf ein repräsentatives Signal der momentanen Drehgeschwindigkeit der Antriebswelle (AP) in einem Frequenzband ergibt, das eine Frequenz eines eigenen Oszillationsmodus der Antriebskette des Fahrzeugs einschließt.

2. Verfahren nach Anspruch 1, bei dem die Filterbehandlung die sukzessive Anwendung von zwei oder drei Bandpassfiltern (TD1, TD2, TD3) in Kaskadenform umfasst.

3. Verfahren nach Anspruch 1 oder 2, bei dem die Amplitude des Korrektursignals vom Getriebegang (6) abhängig ist, der eingelegt ist.

4. Verfahren nach einem der Ansprüche 1 bis 3, bei dem die Amplitude des Korrektursignals vom geschlossenen oder offenen Zustand einer Kupplung (3) abhängig ist, die mit der Antriebswelle (AP) verbunden ist.

5. Verfahren nach einem der Ansprüche 3 oder 4, bei dem die Filterbehandlung mit Bandpassfiltern (TD1, TD2, TD3) angewandt wird, deren Bandbreiten vom eingelegten Gang und/ oder vom geschlossenen oder offenen Zustand einer Kupplung (3) abhängig sind.

6. Fahrzeug umfassend einen Elektromotor (2) als Antrieb, der eine Antriebswelle (AP) antreibt, wobei der Elektromotor (2) ein Drehmoment auf die Antriebswelle (AP) überträgt, das einem Wert entsprechend einem Drehmomentsollwert entspricht, der auf diesen Elektromotor (2) angewandt wird, **dadurch gekennzeichnet, dass** es Vorrichtungen zum Steuern des Elektromotors (2) umfassend zumindest einen Bandpassfilter zum Korrigieren des Drehmomentsollwerts durch das Abziehen eines Korrektursignals umfasst, das sich aus der Anwendung einer Bandpassfilter-Behandlung auf ein repräsentatives Signal der momentanen Drehgeschwindigkeit der Antriebswelle (AP) in einem Frequenzband ergibt, das eine Frequenz eines eigenen Oszillationsmodus der Antriebskette des Fahrzeugs einschließt.

7. Fahrzeug nach Anspruch 6, **dadurch gekennzeichnet, dass** die Steuerungsvorrichtungen des Elektromotors (2) zwei oder drei Bandpassfilter (TD1, TD2, TD3) in Kaskadenform zur Filterbehandlung umfassen.

8. Fahrzeug nach Anspruch 6 und 7, umfassend darüber hinaus einen Verbrennungsmotor (1) und eine Kupplung (3) zum Einkuppeln oder Auskuppeln des Verbrennungsmotors (1) in/ aus der Antriebswelle (AP), und ein Getriebe (6), das von der Antriebswelle (1) angetrieben wird.

9. Fahrzeug nach Anspruch 8, bei dem die Bandpassfilter (TD1, TD2, TD3) von einem eingelegten Gang und/ oder vom geschlossenen oder offenen Zustand einer Kupplung (3) abhängig sind.

Fig.1

Fig.4

11

_Fig.2_

_Fig.3_

Fig.5

Bode Diagram

$\omega_b$

$\omega_h$

Fig.6

Fig. 9

Fig. 8

Fig. 7

Fig.10

Fig.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060025906 A
- US 5610483 A
- JP 2004272741 B
- US 20020060545 A